# EUROPEAN PATENT APPLICATION

(11) **EP 4 480 652 A1**
(43) Date of publication of application: **25.12.2024**
(21) Application number: 23461606.8
(22) Date of filing: 18.06.2023
(51) Int. Cl.: B27C 5/10, B23Q 9/00

(54) **CENTRING FENCE FOR MACHINE TOOLS AND ITS USE FOR CENTRING MILLING MACHINES, ESPECIALLY PLUNGE ROUTERS, WITH RESPECT TO THE AXIS OF THE MATERIAL TO BE MACHINED, ESPECIALLY WOOD**

(71) Applicant: Uniwersytet Zielonogórski, 65-417 Zielona Góra (PL)
(72) Inventor: Doligalski, Michal, 65-395 Zielona Gora (PL); Mrugalski, Marcin, 65-128 Zielona Gora (PL)
(74) Representative: JD&P Patent Attorneys Joanna Dargiewicz & Partners

(57) **Abstract**

A centring fence for machining machines, especially milling machines, making it possible to centre the position of these machines relative to the axis of the material to be machined and the use of such a fence for centring milling machines, especially plunge routers, relative to the axis of the material to be machined, especially wood.

## Description

A subject of the present invention is a centring fence for machining devices using a machining method, in particular milling machines, enabling the position of such devices to be centered with respect to the axis of the material to be machined, in particular wood. It is also an object of the present invention to use such a fence for centring milling machines, in particular plunge router machines, hereinafter also routers, with respect to the axis of the material to be machined, in particular wood.

What has been missing from the prior art to date is a way of smoothly adjusting and, in particular, centring a machining device, e.g. a milling machine, without the need for measuring or scribing. The need for this solution arises in the manufacture of longitudinal joints, particularly in carpentry, where the cutting tool (cutter) is set at an angle (usually perpendicular) to the plane and requires the cutter to be accurately centred relative to the work plane. Where the workpiece plane is narrower than the base (foot) of the router, stable support (maintaining a right angle) between the plane and the cutter is difficult. If the router is used for dowel or tenon holes (including oval holes), it is necessary to centre and support the router foot stably at the same time.

### Prior art

A patent application P433755 entitled 'Composite gate for machine tools, especially CNC milling machines' relates to a gate made of fibre-reinforced composite in a synthetic resin matrix in sandwich or solid composite technology. The gate can be used on CNC milling machines, enabling highly efficient machining of metals and plastics. The gantry runs along the Y axis of the machine, has prepared bases for the key components of the linear drive of the X axis, in its construction it has prepared mounting holes for screwing the linear guides and ball screw unit and other auxiliary equipment (drive motors, end stops and others) characterised by the fact that the entire gantry is made of composite. The gate is made of solid composite (no core) reinforced with fibres in a synthetic resin matrix or sandwich composite, reinforced with fibres in a synthetic resin matrix. The milling machine gate is one of the main components of the milling machine. The gate has vertical supports 2, in which ball nuts 5 will be fixed, and prepared - precisely milled planes parallel to the milling machine table, to which linear carriages providing movement in the Y-axis 6 will be screwed. On the main part of the gate - a horizontal beam on precisely milled planes - linear guides and a ball screw assembly 3 will be fixed, along which the "Z" axis assembly with spindle 4 will move along the X-axis.

The application for a utility model W.095475, entitled 'Milling machine for edges', discloses a milling machine for milling angled edges of sheets of metal in order to prepare them for welding. Edge milling machine, discloses a milling machine for milling angled edges of metal sheets in order to prepare them for welding, which is characterised by the fact that a bail main chuck 2 and an electronic overload system 3 are attached to the motor 1 and a straight auxiliary chuck 14 is attached to the box-shield 9.

A utility model application W.103088 entitled `Wood milling machine' discloses a wood milling machine intended for multi-purpose machining of small flat workpieces of wood, which has a base 1 on which in a column 2 fixed vertically on it there is a main working spindle 3 with a tool holder 4 fixed at its lower end, and on the upper part of the column on its right side horizontally hinged through the axis 5 there is an arm 6, on the end of which there is fixed vertically movable and individually driven spindle 8 with a tool holder 9 at its end, in the centre of the column 1 on its left side there is a frame 10 mounted on the base 1 and on the column 2, in which a fixed axis 11 connects it with a horizontally pivotable and vertically adjustable vice arm 12, at the end of which there is a horizontally rotatable and individually driven spindle 7, a table 13, the material clamping part of which consists of a two-armed lever 14 controlled unilaterally by a cam 15 connected to a chuck 16.

A patent application P269647, entitled 'Tooling for a spindle moulder' presents a tooling for a spindle moulder, especially for wood and wood-based materials, comprising a base, a template and workpiece fixing and clamping elements, in which the template 3 is detachably fixed to the base 1, on which is furthermore placed a sliding plate 10 with a fixed position having through holes 11.

A patent application P378526 entitled 'An edge milling machine with mechanical feed' discloses an edge milling machine with mechanical feed, comprising a motor with a milling cutter seated on the end of its axis, connected, to the motor flange, by a milling cutter housing, seated on parallel guides of a clamping disc and a bail holder fixed to the motor, wherein the milling cutter housing 4 is connected to a slide 7, via a guide 5, and the support 7 is arranged by means of rolling elements 8 on a toothed guide 9 fixed by means of brackets 10 and 11 to the workpiece 12, wherein the support 7 has a feed box with an electric motor, connected at its output via a toothed wheel to the toothing of the guide 9, furthermore an electronic system controlling the feed box is fixed to the support 7, wherein the support 7 is fixed to the workpiece 12 by at least one bracket during the movement of the guide 9 relative to the workpiece 12.

US Patent US10646932B2 entitled 'Mortise jig for a plunge router' discloses a mortise and dowel jig for providing timely and consistent cutting with a plunge router, which mounts to a work table and includes a slot(s) for restraining the router while cutting horizontally and keeping the router vertical with two router guides and which also includes a rear clamp for locking in place and serving as a face for one or more pieces of wood; front clamps to hold each piece of wood in place while cutting; and a centring tool that allows the woodworker to quickly set the centre point of a piece of wood and determine where to make the desired cut.

US Patent US11397063B2, entitled 'Jig for manufacturing of firearm lower receiver' discloses an improved jig for manufacturing a firearm trigger chamber that comprises a power tool holder; an adapter; a guide plate with plate screws; a rear bracket with mounting screws; a front bracket; and at least one of a carriage with at least one locating pin. The guide plate is positioned under the upper surface of the lower body in conjunction with the adapter. The holder is a universal mount and includes a bearing for supporting the rotary tool, and the at least one guide member can be used to facilitate guiding of the rotary tool without placing the rotary tool in direct contact with any of the guide members. A removable locating pin is positioned in the long front and rear pin holes of a firearm receiver that is not threaded and is provided with at least one handle from among a handle, string or other holder.

Patent application US5492160A entitled `Uniform mortise and tenon generating system' shows the mortise and tenon generating system 10 has a removable tenon template 12 which is fixed to the workpiece. A milling machine 26 using a cutter 18 with a bearing flange 30 is guided such that the bearing flange 30 makes circumferential contact with a guide edge 54 on the tenon template 12 and machines a tenon 36 from the workpiece 18. A milling jig 16 with a tilting table 100 having a machining opening 118 is used to support the milling machine 26 and receive the cutter 28. The milling jig 16 also includes a clamping assembly 98 with a rotatable guide member 168 for receiving the workpiece. The tilting table 100 and the rotatable guide member 168 allow the workpiece to be oriented at different angles relative to the cutter 28, in order to form angular and compound angular journals and/or keyways.

The patent application US20080251154A1 entitled `Clamp type mortising jig' describes a clamp type mortising jig that allows the user to make a mortise in a workpiece clamped in the jig using a plunge milling machine. The jig includes a clamp that incorporates a movable jaw assembly and a stationary jaw with a template carriage mounted slidingly between them. The router guide templates can be interchangeably mounted in the template carriage.

Prior art documents disclose solutions for the use of devices (fences, chucks) of a centring or locating nature, for making holes (recesses) by machining, particularly in wood, although none of the disclosures presented so far solves the problem of centring the milling device.

In the light of the prior art to date, no method of smooth adjustment and, in particular, centring of the machining device for machining has been described.

In view of the existing need for a solution to the problem of making holes, including longitudinal holes and oval holes and grooves in the workpiece, in which the support of the machining tool is limited due to the small surface area of the workpiece (the size of the surface area is smaller than the base/feet of the machining device), the aim of the invention was to develop an example or chuck type structure, which can be used in the making of holes (including grooves, oval holes) in narrow surfaces where the tool base support area is limited due to the small surface area of the workpiece, particularly in the field of woodworking where the cutting tool is a router, in particular plunge router.

This objective has been achieved by the centring fence according to the present invention.

The subject of the present invention is a centring fence for machining equipment using a machining method, in particular milling equipment, enabling the position of such equipment to be centred with respect to the axis of the material to be machined, comprising:
- two pairs of alignment pinion strips and arranged in parallel as two sets of opposing linear pinions,
- two centring gears,
- clamping slides,
- a guide base mechanically connected to the pinion strips and provided with a through hole and mounting points to allow the machining device to be fitted and permanently or temporarily connected to the base,
with each pair of pinion strips set opposite to each other and coupled by a centring gear located in the axis of the guide base.

Preferably, the pinion strips are connected to interchangeable clamping slides.

In an advantageous aspect of the invention, the clamping slides are provided with sliding pads to allow free movement of the centring fence along the workpiece.

Alternatively, the clamping slides can be fitted with non-slip pads to fix one position.

Preferably, the guide base and the linear pinion strips are locked against each other by locking mechanisms.

Preferably, then, the locking mechanisms are clamps, especially eccentric clamps, clamping by bolts or locking of the centring gear against the plane of the base.

Preferably, the guide base is provided with holders for mounting the machining device and its permanent or temporary connection to the guide base, which are preferably mounting, magnetic, snap-on or slip-on holders.

In one variant of the invention, the guide base is connected to the pinion strips by means of pins moving along the longitudinal bore.

In another favourable design, the guide base is connected to the pinion strips by means of tongue guides moving along the keyways to form a tongue-and-groove connection, so that where the tongue fits into the keyway and allows movement of the clamping slide relative to the guide base. Preferably, then, the tongue is trapezoidal (so-called dovetail), circular, rounded or irregularly shaped.

In yet another advantageous aspect, the guide base is connected to the pinion strips by linear guides with matching linear bearings.

The object of the invention is also the use of an centring fence as defined above for centring milling machines, in particular routers, with respect to the axis of the material to be worked, in particular wood.

The object of the invention is illustrated in the examples in figures 1-7 of the drawing, where:
Fig. 1 shows the use of the centring stop according to the invention on an example workpiece;
Fig. 2 shows a centring fence for machining equipment using the machining method according to the invention (top view),
Fig. 3 shows the design of the invention centring fence for machine tools according to the invention (bottom view);
Fig. 4 shows the positioning of the fence according to the invention on the material to be machined - for material with a wide surface area (close to or greater than the width of the base width);
Fig. 5 shows the positioning of the fence according to the invention on the workpiece - for material with a narrow surface area (less than the width of the base);
Fig 6 shows the connection of the guide base 4 to the opposing pinion 1 by means of a tongue-and-groove connection of the trapezoidal type in the centring fence according to the present invention, while the
Fig 7 shows the connection of the guide base 4 to the opposing pinion 1 via a tongue-and-groove connection of the trapezoidal type in the centring fence according to the present invention.

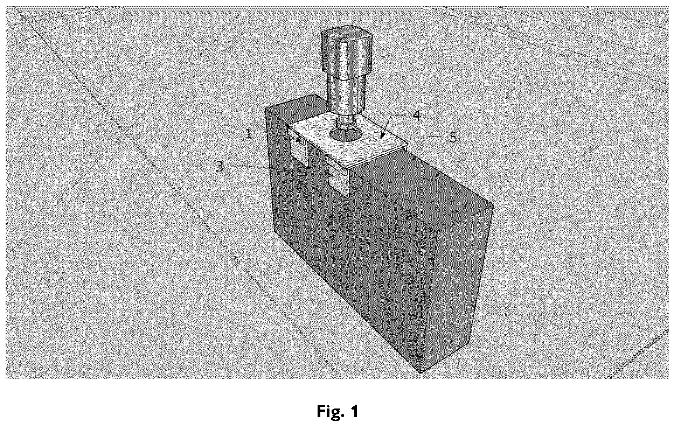

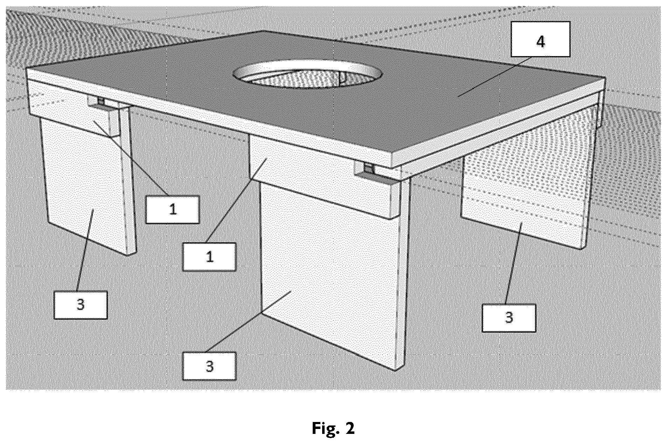

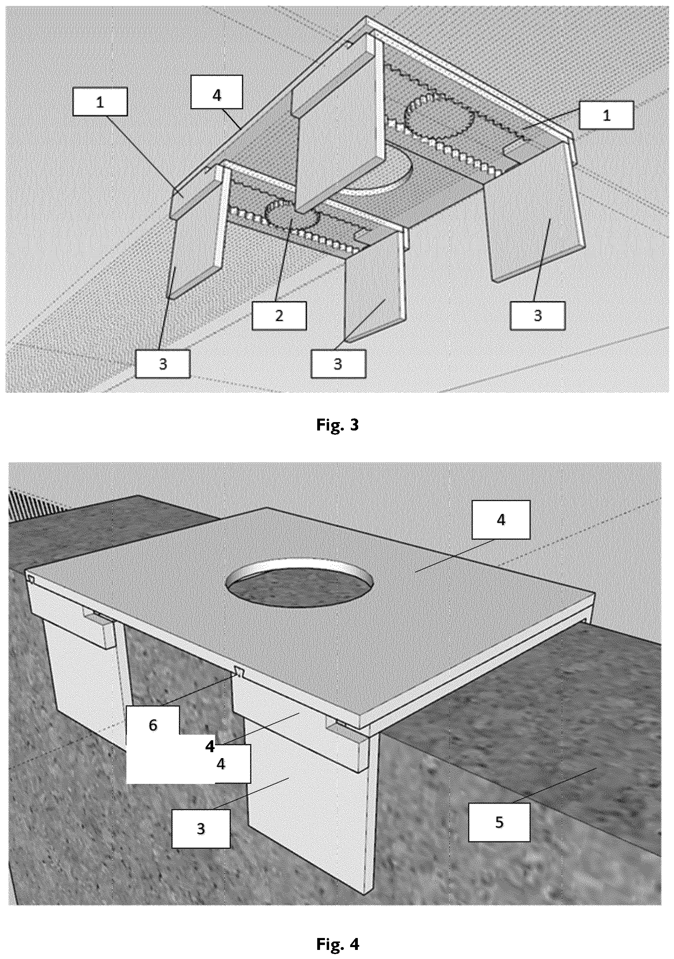

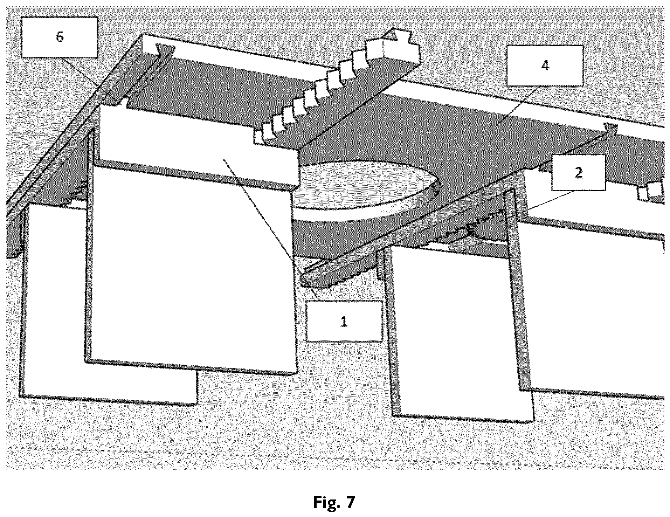

The fence is applied to the workpiece according to fig. 1 and figs. 4-5. The centring fence for machine tools according to the invention makes it possible to center the position of the machining device, in particular the milling device, with respect to the axis of the material to be machined and comprises according to figs. 1-7:
- two pairs of pinion strips 1 aligning and arranged in parallel as two sets of opposing linear pinions,
- two centring gears 2,
- clamping slides 3 for guiding and fixing,
- a guide base 4 mechanically connected to the pinion strips 1 and provided with a through hole in which the milling machine according to fig. 1, and provided with mounting points to enable the mounting of the machining device and its permanent or temporary connection to the base 4.

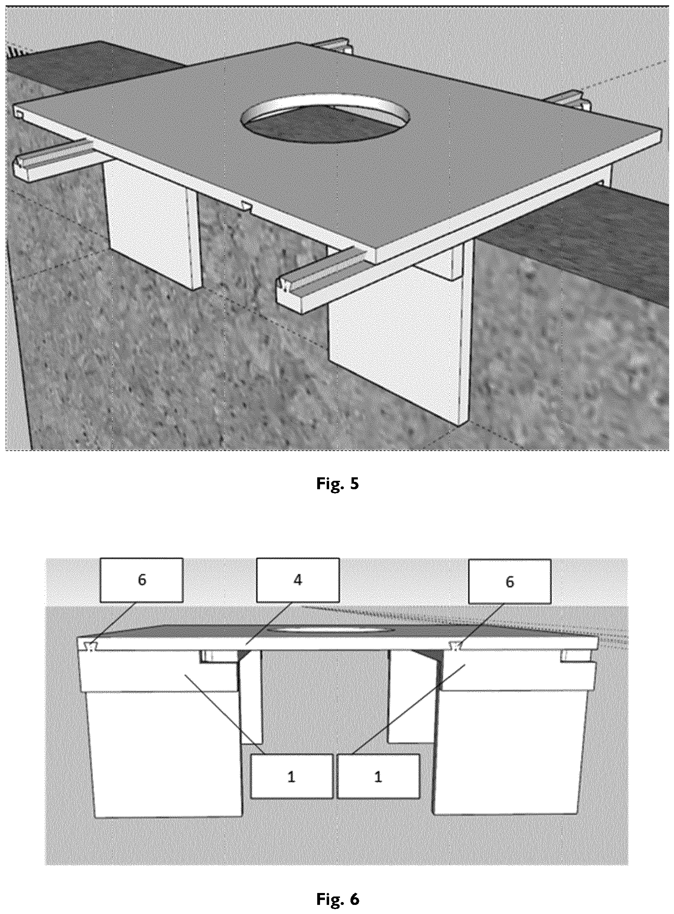

Each pair of pinion strips 1 is set opposite to each other and coupled by a centring gear 2 located in the axis of the guide base 4. The pinion strips 1 are connected to interchangeable clamping slides 3, while the clamping slides 3 are fitted with sliding shoes to allow free movement of the centring fence along the workpiece. The guide base 4 and the linear pinion strips 1 are locked against each other by locking mechanisms. According to fig. 6-7 such locking mechanism is the tongue-and-groove connection 6, but alternatively clamps, especially eccentric clamps, clamping by screws or locking of the centring gear 3 relative to the plane of the base 4 may be used.

The guide base 4 is provided with holders for mounting the machining device and its permanent or temporary connection to the guide base 4. According to fig. 1, which shows the machining device attached by means of the snap-on holders to the guide base 4.

According to figs 6-7, the guide base 4 is connected to the pinion strips 1 by means of tongue guides moving along the grooves, forming a tongue-in-groove connection 6, so that where the tongue fits into the groove and allows movement of the clamping slide 3 relative to the guide base 4. The tongue is trapezoidal in shape (so-called dovetail) but alternatively can be round, rounded or irregular in shape.

The device makes it possible to automatically centre the guide base 4 and thus centre the position of the machining device, e.g. a milling machine, in particular a router, fixed to the plane of the guide base 4 relative to the axis of the material to be machined, e.g. wood, as shown in fig 1.

The displacement of one of the pinion strips causes, by coupling with the centring gear 2, the displacement movement of the other of the pinion strips 1 by the same length. The simultaneous clamping of both pairs of pinion strips 1 on the workpiece causes centring of the position of the machining device/tool (cutting tool) with respect to the axis of the plane to be machined. The essence of the invention is centring without the need for measuring or scribing.

Clamping slides 3 for guiding and fixing in the fence according to the present invention perform the following tasks:
1. Allowing longitudinal milling to be carried out in order to make joints, in particular foreign tongue joints. In this case, a minimum clearance must be maintained between the work surface and the guides 3,
2. Enabling making pegs and/or pivots - when the slides 3 are used to fix the position of the unit and prevent it from moving,
3. Enabling multi-purpose grooving,
4. Enabling holes and/or gullies for different purposes.

The fence according to the invention makes it possible to automatically centre the guide base 4, and thus to centre the machining device itself using the machining method attached to the guide plane 4, with respect to the axis of the material to be machined, for example wood. The fence according to the invention is used in particular for the centring of milling machines. The problem that has been solved by the device according to the invention is the possibility of centring the machining device, without measuring or scribing, by means of a set of pinion strips 1 and the possibility of supporting the device stably at the same time, by means of guiding and locating clamping slides 3, on a material 5 with a cross-section smaller than the cross-section of the base of the machining device.

## Claims

1. A centring fence for machining equipment using a machining method, in particular milling equipment, for centring the position of this equipment with respect to the axis of the material (5) to be machined, comprising:
- two pairs of pinion strips (1) aligning and arranged in parallel as two sets of opposing linear pinions,
- two centring gears (2),
- clamping slides (3) for guiding and fixing,
- a guide base (4) mechanically connected to the pinion strips (1) and provided with a through hole and mounting points to allow the machining device to be mounted and permanently or temporarily connected to the base (4),
with each pair of pinion strips (1) opposing each other and coupled by a centring gear (2) located in the axis of the guide base (4).

2. The centring fence according to claim 1, **characterised in that** the pinion strips (1) are connected to interchangeable clamping slides (3).

3. The centring fence according to claims 1 or 2, **characterised in that** the clamping slides (3) are equipped with sliding shoes allowing free movement of the fence along the workpiece.

4. The centring fence according to claims 1 or 2, **characterised in that** the clamping slides (3) are provided with anti-slip pads allowing one position to be fixed.

5. The centring fence to any of the preceding claims, **characterised in that** the guide base (4) and the linear pinion strips (1) are locked against each other by locking mechanisms.

6. The centring fence according to claim 5, **characterised in that** the locking mechanisms are clamps, in particular eccentric clamps, clamping by bolts or locking of the centring gear (3) relative to the plane of the base (4).

7. The centring fence according to any of the preceding claims, **characterised in that** the guide base (4) is provided with brackets for mounting the device machining centre and its permanent or temporary connection to the guide base (4).

8. The centring fence according to claim 7, **characterised in that** the holders are mountable, magnetic, snap-on or slide-on.

9. The centring fence according to any of claims 1-8, **characterised in that** the guide base (4) is connected to the pinion strips (1) by means of pins moving along the longitudinal bore.

10. The centring fence according to any of claims 1-8, **characterised in that** the guide base (4) is connected to the pinion strips (1) by means of tongue guides moving along the grooves to form a tongue-to-groove connection (6), so that where the tongue is aligned with the groove and allows movement of the clamping slide (3) relative to the guide base (4).

11. The centring fence according to claim 10, **characterised in that** the feather is trapezoidal (so-called dovetail), circular, rounded or irregularly shaped.

12. The centring fence according to any of claims 1-8, **characterised in that** the guide base (4) is connected to the pinion strips (1) by means of linear guides with matching linear bearings.

13. A use of an centring fence as defined in any of the claims 1-12 for centring milling machines, especially routers, with respect to the axis of the material (5) to be worked, especially wood.
